# EUROPEAN PATENT SPECIFICATION

(11) **EP 3 128 664 B1**
(45) Date of publication and mention of the grant of the patent: **24.04.2019**
(21) Application number: 15774400.4
(22) Date of filing: 25.02.2015
(51) Int. Cl.: H02M 1/14, H02M 3/156, H02M 7/5387, H02J 1/10, H02M 1/00, H02J 3/38, H02M 1/44, H02M 3/158, H02J 13/00

(54) **POWER CONVERSION SYSTEM**
LEISTUNGSUMWANDLUNGSSYSTEM
SYSTÈME DE CONVERSION D'ÉNERGIE

(30) Priority: 31.03.2014 JP 2014074383
(43) Date of publication of application: 08.02.2017
(73) Proprietor: Panasonic Intellectual Property Management Co., Ltd., Osaka-shi, Osaka 540-6207 (JP)
(72) Inventor: KIKUCHI, Akihiro, Osaka-shi, Osaka 540-6207 (JP); GOTO, Yasunori, Osaka-shi, Osaka 540-6207 (JP); IWAMATSU, Yusuke, Osaka-shi, Osaka 540-6207 (JP); GOTO, Shusaku, Osaka-shi, Osaka 540-6207 (JP)
(74) Representative: Appelt, Christian W.
(86) International application number: PCT/JP2015/000948
(87) International publication number: WO 2015/151396

(56) References cited:
- DE-U1-202010 008 254
- JP-A- 2006 034 047
- JP-A- 2007 288 941
- US-A1- 2007 080 659
- US-A1- 2013 009 479
- US-A1- 2013 187 463

## Description

### TECHNICAL FIELD

The present invention relates to a power conversion system which converts direct-current power outputs from a plurality of distributed power supplies into alternating-current power.

### BACKGROUND ART

In recent years, distributed power supply apparatuses using distributed power supplies such as solar power generation and a fuel cell are increasingly popular. A distributed power supply apparatus converts direct-current power generated by a distributed power supply using a power conversion system such as a power conditioner into alternating-current power, and outputs the alternating-current power to a commercial power system.

As for such power conversion systems, techniques for preventing decrease in power conversion efficiency in voltage conversion circuits have been studied (for example, see document JP 2013-106433 A). According to the technique disclosed in Patent Literature 1, the power conversion system includes: boost chopper circuits (voltage converter circuits) and control circuits corresponding respectively to plural solar cell strings. Each of the control circuits includes: an individual control unit which outputs a pulse signal for switching driving of a corresponding one of the boost chopper circuits, a temperature detection unit, and a frequency determination unit which determines a switching frequency for a pulse signal. This frequency determination unit determines the switching frequency based on the result of the detection by the temperature detection unit.

Document DE 20 2010 008 254 U1 discloses a power converter assembly for a solar power plant comprising boost converter means, direct current bus bar means and control means, wherein the boost converter means comprises a plurality of boost converter blocks each having a direct current input adapted to be connected to a photovoltaic array, and each one of the boost converter blocks includes at least one boost converter unit. SUMMARY OF THE

### INVENTION

### TECHNICAL PROBLEMS

In document JP 2013-106433 A, an output voltage from a distributed power supply is adjusted by a chopper circuit (converter) and is output to a DC bus (direct-current line). Furthermore, a direct-current voltage output to the DC bus is converted into alternating-current power by an inverter, and is supplied to a commercial power system. Here, the converter adjusts an input voltage to a predetermined value (the value of voltage in the DC bus) by pulse width modulation by a switching element. At the time when the switching operation by the switching element is started, switching noises are generated.

Here, when timings for controlling some or all of the converters connected respectively to the plural distributed power supplies overlap, power to the DC bus varies significantly, which may make a voltage in the DC bus instable. In addition, when the timings for controlling some or all of the converters overlap, switching noises overlap, which may generate larger noises. Even in this case, the stability in the bus voltage of the DC bus may be decreased.

The present invention was made in view of these problems, and has an object to provide a power conversion system which stabilizes a bus voltage of the DC bus connected to respective converters of plural distributed power supplies.

### SOLUTIONS TO PROBLEMS

The above mentioned problems are addressed by means of a power conversion system according to claim 1.
(1) A power conversion system according to an aspect of the present invention is a power conversion system which supplies an alternating-current power system with power output from distributed power supplies, the power conversion system including: a plurality of converters each of which includes a switching element, is connected to a corresponding one of the distributed power supplies, and converts a direct-current voltage input from the corresponding one of the distributed power supplies into a direct-current output having a predetermined voltage; an inverter which receives the direct-current output from the plurality of converters via a direct-current power path that is shared, converts the direct-current output received into an alternating-current output having a predetermined frequency, and supplies the alternating-current output to the alternating-current power system; a plurality of converter controllers which are provided correspondingly to the plurality of converters, and each of which performs pulse driving of the switching element of a corresponding one of the plurality of converters so as to cause the switching element to generate a direct-current output based on a time period; an inverter controller which is provided correspondingly to the inverter, and drives the inverter based on the time period so as to cause the inverter to generate an alternating-current output; and a timing controller which outputs timing signals for causing the plurality of converter controllers to start driving of the plurality of converters on a basis of a predetermined time cycle, wherein, upon obtaining the timing signals, the plurality of converter controllers start driving of the plurality of converters at different timings in the predetermined time cycle.
(2) It is preferable that, in the power conversion system, each of the plurality of converter controllers: hold information related to a position of the corresponding one of the plurality of converter controllers in a driving start order in which pulse driving by the corresponding one of the plurality of converter controllers is started; and upon obtaining a corresponding one of the timing signals, start pulse driving of the corresponding one of the plurality of converters at a timing based on the position of the corresponding one of the plurality of converter controllers in the driving start order.
(4) It is preferable that, in the power conversion system, the timing controller: include a random number generator; and determine the position of the one of the plurality of converter controllers in the driving start order, based on a random number value obtained from the random number generator.
(6) In the power conversion system, each of the plurality of converter controllers start driving of the corresponding one of the converters, and then output an end signal, and each of the plurality of converter controllers receive the end signal, count the number of times of reception of the end signal, and start driving of the corresponding one of the converters when the converter controller determines that its turn to start driving the corresponding one of the converters has come, based on the number of times of reception of the end signal.
(7) It is preferable that, in the power conversion system, an interval between timings for starting driving of the plurality of converters vary depending on the number of the plurality of converters.
(8) It is preferable that, in the power conversion system, virtual controller units be connected respectively to the plurality of converter controllers and the inverter controller, and the timing controller be one of the virtual controller units.
(8) It is preferable that, in the power conversion system, , if abnormality occurs in a value of voltage in the direct-current power path, the timing controller transmit a special control command to the plurality of converter controllers and the inverter controller, the special control command being a command for causing the plurality of converter controllers and the inverter controller to immediately start driving of corresponding ones of the plurality of converters and the inverter, and all of the plurality of converter controllers and the inverter controller which received the special control command start driving of the corresponding ones of the plurality of converters and the inverter at a same time.

### ADVANTAGEOUS EFFECTS OF INVENTION

According to the present invention, it is possible to stabilize a bus voltage of a DC bus connected to each of converters of a plurality of distributed power supplies.

### BRIEF DESCRIPTION OF DRAWINGS

FIG. 1. is a block circuit diagram of a power conversion system according to an example not falling in the scope of the claims.
FIG. 2 is a circuit diagram of a converter and an inverter according to said example.
FIG. 3 is a flowchart of a processing procedure according to said example.
FIG. 4 is a timing chart according to said example.
FIG. 5 is a flowchart of a processing procedure according to a second example not falling in the scope of the claims.
FIG. 6 is a timing chart according to said second example.
FIG. 7 is a flowchart of a processing procedure according to a third example not falling in the scope of the claims.
FIG. 8 is a flowchart of a processing procedure according to Embodiment 1.
FIG. 9 is a flowchart of a processing procedure according to a fourth example not falling in the scope of the claims.
FIG. 10 is a flowchart of a processing procedure in a timing controller according to Embodiment 2.
FIG. 11 is a flowchart of a processing procedure in an inverter controller and a converter controller according to Embodiment 2.
FIG. 12 is a timing chart of control according to Embodiment 2.
FIG. 13 is a flowchart of a processing procedure according to Embodiment 3.

### DESCRIPTION OF EMBODIMENTS

### EXAMPLE 1

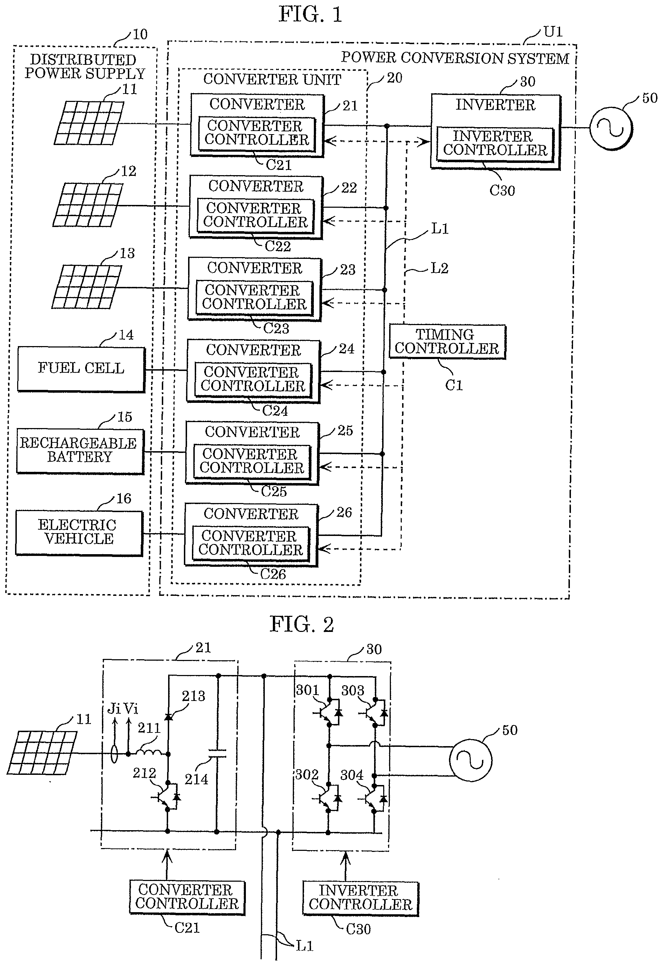

Example 1, which does not show all features of the invention but which is helpful for understanding the invention, is described with reference to FIGs. 1 to 4.

As illustrated in FIG. 1, power conversion system U1 according to Embodiment 1 includes a plurality of power converters such as converter unit 20, inverter 30, etc. Here, converter unit 20 and inverter 30 are connected via a direct-current line (DC bus L1). Converter unit 20 is connected to distributed power supply 10, and inverter 30 is connected to system power supply 50 which is a commercial power supply.

In this example, solar battery panels 11 to 13, fuel cell 14, rechargeable battery 15, and electric vehicle 16 are used as distributed power supplies 10.

Solar battery panels 11 to 13 are power generation apparatuses which convert solar light energy into direct-current power.

Fuel cell 14 is a power generation apparatus which obtains direct-current power by causing a chemical reaction of hydrogen and oxygen.

Rechargeable battery 15 is a battery which charges power, and discharges and supplies the charged power as necessary.

Electric vehicle 16 is a vehicle including a mounted charger device, driving the charger device using an electric motor, and capable of supplying the power stored in the vehicle to a home.

Converter unit 20 includes converters 21 to 26 connected to respective distributed power supplies 10. Converters 21 to 26 are connected to inverter 30 via DC bus L1. In this example, independent inverter 30 is used.

FIG. 2 illustrates configurations of inverter 30 and converter 21. The configurations of respective converters 22 to 26 are the same as the configuration of converter 21.

Converter 21 is formed with a non-insulative chopper circuit having a known configuration, and includes direct-current reactor 211, boost switching element 212, diode 213, and capacitor 214. It is to be noted that converter 21 is not limited to such a non-insulative one, and an insulative one is also possible.

Converter 21 performs pulse driving of switching element 212 at a predetermined ON duty ratio to boost a direct-current voltage input from a corresponding one of the distributed power supplies at a predetermined boost ratio, and outputs the boosted direct-current voltage.

Converter controller C21 outputs a driving pulse signal to switching element 212 of converter 21.

Inverter 30 has a known configuration, specifically, is formed with a single-phase bridge circuit in which series circuits of switching elements 301 and 302 and series circuits of switching elements 303 and 304 are connected in parallel. Inverter controller C30 drives these switching elements 301 to 304 using a pulse signal of the predetermined ON duty ratio under pulse width modulation (PWM) control, and converts direct-current power output from converter 21 into alternating-current power synchronized with system power supply 50. The converted alternating power is formed to have a sine-wave shape by means of harmonic components being attenuated by a filter circuit (not illustrated), and is superimposed onto system power supply 50. Inverter 30 is not limited to an inverter for single-phase alternating-current output, and may be an inverter for a three-phase alternating-current. In addition, inverter 30 is not limited to an inverter having one of a single-phase configuration and multiple-phase configuration, and is a neutral point clamped inverter, or the like.

Converter controllers C21 to C26 are provided correspondingly to respective converters 21 to 26. Each of converter controllers C21 to C26 is controlled by a corresponding one of converter controllers C21 to C26 so that each of converter controllers C21 to C26 starts a switching operation in which a switching element of the converter is intermittently switched ON and OFF using a high frequency. Each of converters 21 to 26 performs chopper control for generating a predetermined direct-current voltage (for example, DC 350 V) by the switching operation.

Converters 21 to 23 are connected respectively to solar battery panels 11 to 13, and perform maximum power point tracking control (MPPT control) suitable for power generation affected by a solar light radiation state. The output (direct-current voltage) of solar battery panels 11 to 13 are converted into bus voltage values and are output to DC bus L1.

Converter 24 is connected to fuel cell 14, converts an output (a direct current) of fuel cell 14 into a bus voltage value, and outputs the value to DC bus L1.

Converter 25 is connected to rechargeable battery 15, converts an output (a direct current) of rechargeable battery 15 into a bus voltage value, and outputs the value to DC bus L1, and supplies power supplied from DC bus L1 to rechargeable battery 15.

Converter 26 is connected to electric vehicle 16 via a cable with a connector, outputs power stored in a mounted charger device of electric vehicle 16 to DC bus L1, and supplies power supplied from DC bus L1 to the mounted charger device of electric vehicle 16.

Inverter controller C30 controls switching of inverter 30. Inverter controller C30 controls switching of the switching element of inverter 30 so as to perform conversion between a direct current and an alternating current. Here, the direct-current power is converted into alternating power having a predetermined voltage and a predetermined frequency (for example, AC 202 V and 50 Hz).

Inverter 30 supplies alternating-current power to system power supply 50 via a distributed board (not illustrated).

Timing controller C1 gives a timing signal to a current one of converter controller C21 to C26 and inverter controller C30 on a per time cycle basis predetermined in advance. Upon receiving the timing signal, the current one of converter controllers C21 to C26 and inverter controller C30 performs pulse driving of a corresponding one of converters 21 to 26 and inverter 30 in a different period in a predetermined time cycle so that driving of corresponding ones of converters 21 to 26 and inverter 30 is not started at the same time.

Each of converter controllers C21 to C26, inverter controller C30, and timing controller C1 are connected via communication line L2. As described later, timing controller C1 adjusts timing for starting pulse driving by each of converter controllers C21 to C26 and inverter controller C30.

Timing controller C1, inverter controller C30, and each of converter controllers C21 to C26 are configured to have a central processing unit (CPU), a memory for storing a control program, a timer, etc. as a non-limiting example.

In addition, timing controller C1 does not need to be provided separately from inverter controller C30 and converter controllers C21 to C26. For example, inverter controller C30 and converter controllers C21 to C26 may have a function of timing controller C1.

Timing controller C1 transmits a timing signal to inverter controller C30. Inverter controller C30 starts pulse driving of inverter 30 at a predetermined timing suitable for the timing signal. In addition, timing controller C1 transmits a timing signal to each of converter controllers C21 to C26. Each of converter controllers C21 to C26 starts pulse driving of a corresponding one of converters 21 to 26 at a different timing suitable for the timing signal.

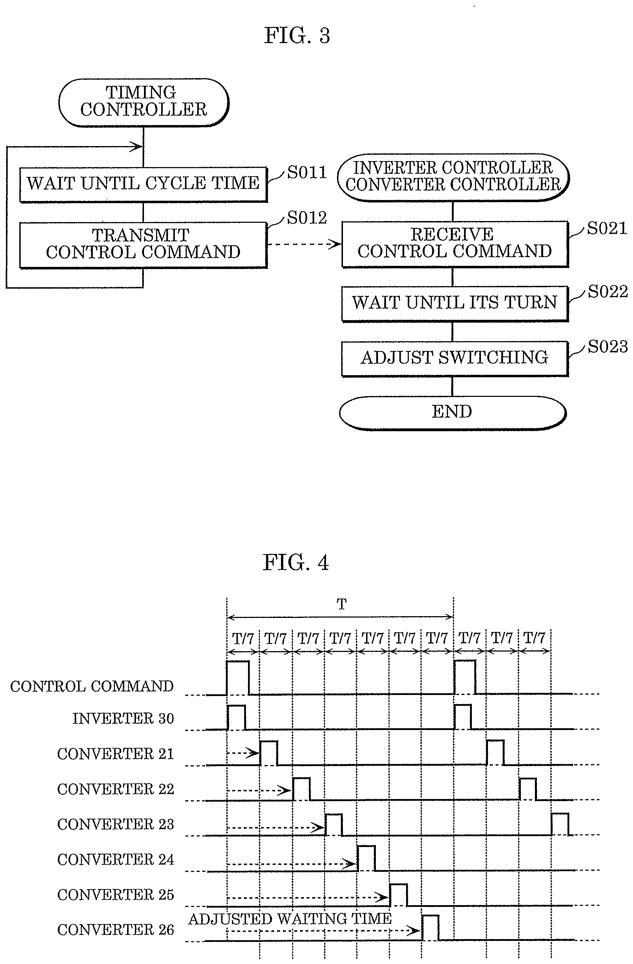

As illustrated in FIG. 4, timing controller C1 transmits a timing signal to each of inverter controller C30 and converter controllers C21 to C26 in a predetermined cycle T. For this reason, timing controller C1 has a memory which holds data related to cycle T. Here, as cycle T, time (for example, several µ seconds) approximately the same as time of an inverse of a switching frequency of a converter. It is also possible to use longer time (for example, a second) as cycle T depending on a state (for example, when noises are small).

In addition, timing controller C1 includes a counter which recognizes the number of converters connected to a single inverter. The number of converters is counted by receiving a signal including an ID number from the converter controller of each converter. Based on cycle T which has been set in advance and the number of converters, it is possible to calculate a total number (n) of inverter 30 and converters 21 to 26, and determine time [T / n]

FIG. 4 illustrates a timing (trigger signal) for starting pulse driving of each of inverter 30 and converters 21 to 26. Each of inverter controller C30 and converter controllers C21 to C26 outputs a driving pulse signal to a corresponding one of inverter 30 and converters 21 to 26 at a timing according to the trigger signal illustrated in FIG. 4, and starts pulse driving. Each of inverter controller C30 and converter controllers C21 to C26 starts pulse driving after elapse of a different time period (waiting time period) from reception time of the timing signal. In this way, timings for starting pulse driving are dispersed by starting pulse driving at timings based on the different waiting time periods. For this reason, each of inverter controller C30 and converter controllers C21 to C26 holds data related to the waiting time periods. In this way, each of inverter controller C30 and converter controllers C21 to C26 is caused to adjust a timing for starting pulse driving of a corresponding one of inverter 30 and converters 21 to 26 in a predetermined order (driving start order in which driving by each of inverter controller C30 and converter controllers C21 to C26 is started). For this reason, as waiting time periods, different values are set for respective inverter controller C30 and converter controllers C21 to C26. The waiting time periods are set according to the total number of inverter 30 and converters 21 to 26 included in power conversion system U1 and cycle T. The total number (n) and information related to cycle T are included in a control command, and each of inverter controller C30 and converter controllers C21 to C26 obtains the total number (n) and information related to time [T / n] from the control command. In this embodiment, the total number (n) is seven. For this reason, "(i / 7) T" is set as a waiting time period for each of inverter controller C30 and converter controllers C21 to C26. Here, "i" denotes a position of each of inverter 30 and converters 21 to 26 in a driving start order, and a different value ranging from "0" to "6" is used as "i" for each of inverter 30 and converters 21 to 26.

It is to be noted that, from the viewpoint of stability in the voltage of DC bus L1, the position of inverter controller C30 in the driving start order is set earlier than the position of each of converter controllers C21 to C26 in the driving start order. In other words, the position "i" which is set to inverter controller C30 is "0". In addition, inverter controller C30 is driven until time immediately before the end of cycle T.

Furthermore, inverter controller C30 may perform driving continuously after starting driving once.

In addition, each of converter controllers C21 to C26 is stopped until the end of cycle T.

Next, FIG. 3 illustrates processes for adjusting timings for starting pulse driving.

Here, timing controller C1 executes a waiting process (Step S011).

More specifically, timing controller C1 measures time elapsed from time at which a timing signal transmitted last. Timing controller C1 waits until time (cycle time) at which elapsed time reaches cycle T.

When timing controller C1 determines that elapsed time has reached cycle T, timing controller C1 executes a process for transmitting a timing signal (Step S012). More specifically, timing controller C1 transmits a timing signal to each of inverter controller C30 and converter controllers C21 to C26.

On the other hand, a current one of inverter controller C30 and converter controllers C21 to C26 executes a process for receiving a timing signal (Step S021). More specifically, the current one of inverter controller C30 and converter controllers C21 to C26 transmits a timing signal transmitted by timing controller C1 via communication line L2.

Next, the current one of inverter controller C30 and converter controllers C21 to C26 executes a process for waiting until its turn to start driving a corresponding one of inverter 30 and converters 21 to 26 (Step S022). More specifically, the current one of inverter controller C30 and converter controllers C21 to C26 measures time elapsed from when a timing signal was received. Subsequently, the current one of inverter controller C30 and converter controllers C21 to C26 waits until stored waiting time [(i / 7) T] elapses.

Next, the current one of inverter controller C30 and converter controllers C21 to C26 executes a process for starting pulse driving (Step S023). More specifically, upon determining that the waiting time has elapsed, the current one of inverter controller C30 and converter controllers C21 to C26 outputs a driving pulse signal to start pulse driving of the corresponding one of inverter 30 and converters 21 to 26, and adjusts the timing for starting pulse driving (adjusts a phase).

According to this example, the following effects can be obtained.
(1) In this example, each of inverter controller C30 and converter controllers C21 to C26 sets a waiting time period shifted by time [T / n]. Each of inverter controller C30 and converter controllers C21 to C26 executes a process for waiting until its turn to start driving a corresponding one of inverter 30 and converters 21 to 26 comes (Step S022) and a process for starting pulse driving (Step S023). In this way, by dispersing timings for starting pulse driving in respective inverter 30 and converters 21 to 26, it is possible to reduce variation in power of DC bus L1, disperse switching noises, and stabilize a bus voltage. Furthermore, depending on the number of the inverter and converters connected to DC bus L1, timings for starting pulse driving are controlled to be dispersed evenly. In this way, noises to be superimposed onto DC bus L1 can be distributed evenly.
(2) In this example, each of inverter controller C30 and converter controllers C21 to C26 holds data related to waiting time for determining a timing for executing a process for starting pulse driving. In this way, in respective inverter controller C30 and converter controllers C21 to C26, it is possible to disperse timings for starting pulse driving based on timing signals.

### EXAMPLE 2

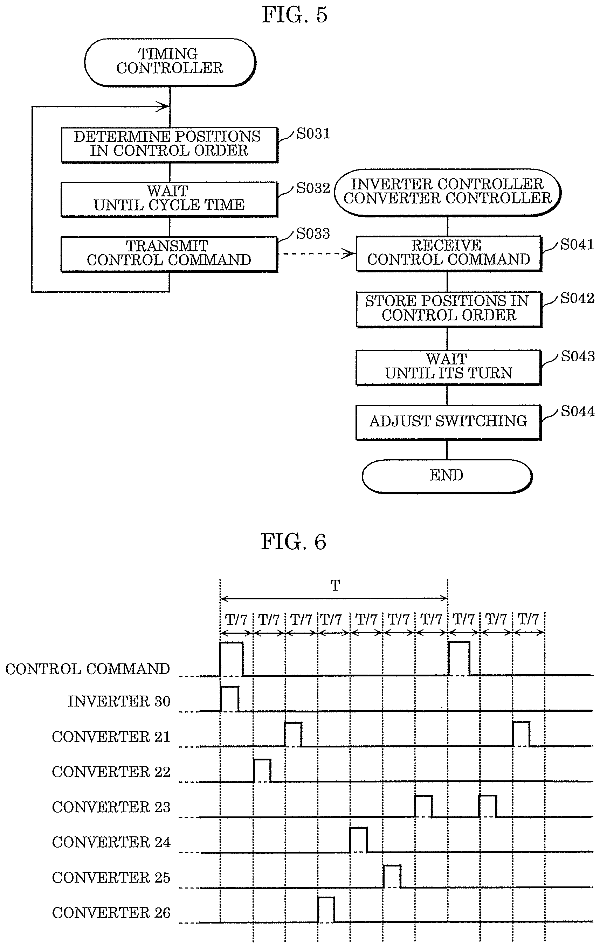

Next, example 2, which is not claimed, but necessary for understanding the invention, is described with reference to FIGs. 5 and 6. In example 2, positions in a driving start order in which pulse driving by each of converter controllers C21 to C26 and inverter controller C30 is performed are randomly changed. Detailed descriptions of parts similar to those in example 1 are not repeated.

Here, in order to shift timings at which processes for starting pulse driving in respective converter controllers C21 to C26 and inverter controller C30, data related to unit time [T / n] is held in advance in each of inverter controller C30 and converter controllers C21 to C26. In this embodiment, in the same manner as in example 1, "7" is used as a total number n of converter controllers C21 to C26 and inverter controller C30.

Next, as illustrated in FIG. 5, timing controller C1 executes a process for determining positions in the driving start order (Step S031). More specifically, timing controller C1 randomly determines the positions in the pulse driving start order (driving start order) for respective converters 21 to 26. For example, timing controller C1 includes a random number generator, assigns random number values to respective converter controllers C21 to C26, and determines the positions of respective converter controllers C21 to C26 in the driving start order in a descending order of the random number values.

The position of inverter controller C30 in the driving start order is assumed to be first.

Next, timing controller C1 executes a waiting process until a cycle time in the same manner as in Step S011 (Step S032).

When timing controller C1 determines that the cycle time has reached, timing controller C1 executes a process for transmitting a timing signal (also referred to as a control command in the diagram and hereinafter) (Step S033). More specifically, timing controller C1 transmits a timing signal to a current one of inverter controller C30 and converter controllers C21 to C26. In this case, the timing signal includes information related to the determined position of the current one of the inverter controller and converter controllers in the determined driving start order, and identification information for identifying the current one of inverter and converters corresponding to the position. Based on the information related to the determined position of the current one of the inverter controller and converter controllers in the determined driving start order, the current one of inverter controller C30 and converter controllers C21 to C26 identifies its turn to start driving the corresponding one of the inverter and converters.

In addition, the current one of inverter controller C30 and converter controllers C21 to C26 executes a process for receiving a timing signal in the same manner as in Step S021 (Step S041).

In this case, the current one of inverter controller C30 and converter controllers C21 to C26 executes a process for storing the position corresponding to the identification information of the current controller itself (Step S042). More specifically, the current one of inverter controller C30 and converter controllers C21 to C26 stores the position included in the timing signal. Subsequently, the current one of inverter controller C30 and converter controllers C21 to C26 calculates waiting time based on the driving start order. Here, when the position is j-th, waiting time [((j - 1) / 7)T] is identified.

Subsequently, the current one of inverter controller C30 and converter controllers C21 to C26 executes a waiting process (Step S043) until its turn to start driving a corresponding one of inverter 30 and converters 21 to 26 comes and a pulse driving start process (Step S044) in the same manner as in Steps S022 and S23.

As illustrated in FIG. 6, in first cycle T, pulse driving is started with inverter 30, converter 22, converter 21, ... in this listed driving start order. In next cycle T, as a result of randomly changing the positions in the driving start order, pulse driving is started with converter 23, converter 21, ... in this listed driving start order.

According to this example, the following effects can be obtained.

(3) In this example, timing controller C1 executes a process for determining the positions of converter controllers C21 to C26 in the driving start order (Step S031). Here, the positions of converter controllers C21 to C26 in the driving start order are determined randomly. Subsequently, the current one of inverter controller C30 and converter controllers C21 to C26 executes a waiting process (Step S043) until its turn comes, based on the position of the current one of converter controllers C21 to C26 in the driving start order. When pulse driving processes are started in the same order in each cycle, noises of a same magnitude are generated at the same timing for each cycle, which may produce deviation in the magnitude of noises in the cycle. For this reason, excessive noises may be generated cyclically, and may affect peripheral electric apparatuses. In view of this, it is possible to reduce such deviation in the magnitude of noises that are generated, by changing the positions of converter controllers C21 to C26 in the driving start order.

### EXAMPLE 3

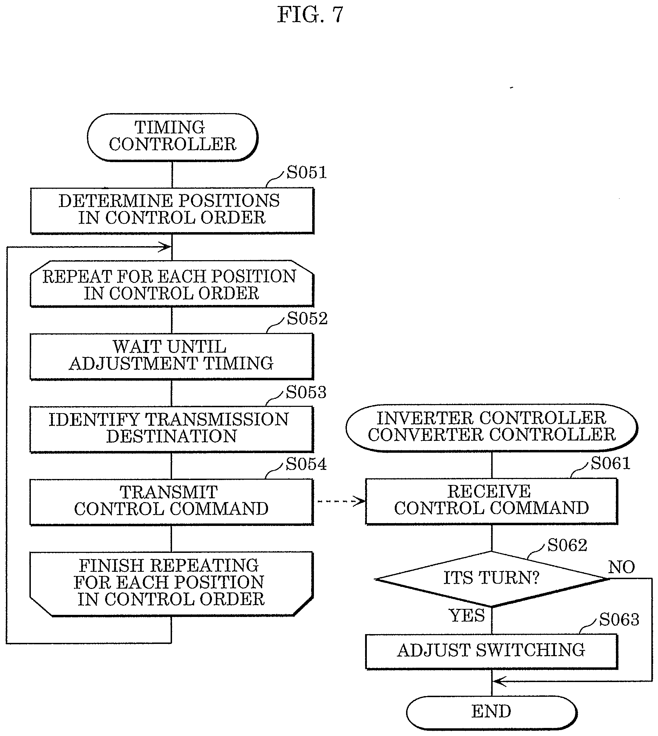

Next, Example 3, which is not claimed, but necessary for understanding the invention, is described with reference to FIG. 7. In example 3, timing controller C1 separately transmits a timing signal to each of inverter controller C30 and converter controllers C21 to C26. Detailed descriptions of parts similar to those in examples 1 and 2 are not repeated.

In this case, apparatus identification information for identifying a transmission destination of a timing signal is held in a memory in timing controller C1, inverter controller C30, and each of converter controllers C21 to C26.

Here, as illustrated in FIG. 7, timing controller C1 executes a process for determining positions of converter controllers C21 to C26 in a driving start order in the same manner as in Step S031 in example 2 (Step S051). It is to be noted that the position of inverter controller C30 in the driving start order is assumed to be first.

Subsequently, the following processes are repeated for each of the positions in the driving start order.

Here, first, timing controller C1 executes a waiting process until a driving start timing (adjustment timing) (Step S052). More specifically, timing controller C1 measures time elapsed from execution of the process (Step S051) for determining the position in the driving start order, and waits until time [T / n] elapses.

Next, timing controller C1 executes a process for identifying a transmission destination in the driving start order according to the position in the driving start order (Step S053). More specifically, timing controller C1 identifies one of the inverter controller and a converter included in the converter controllers for which driving should be started next in the order stored in the memory, and obtains apparatus identification information of the one of the inverter controller and the converter controllers from the memory.

Next, timing controller C1 executes a process for transmitting a timing signal (Step S054). More specifically, timing controller C1 transmits a timing signal including the apparatus identification information related to the one of the inverter controller and the converter controllers for which driving should be started next in the order, to the one of the inverter controller and the converter controllers. In this case, the memory of timing controller C1 is updated to record that the process for the one of the inverter controller and the converter controllers which is at the current position in the driving start order and to which the current timing signal was transmitted has been ended (the position in the driving start order is deleted).

Such an operation by timing controller C1 is repeated until processes for targets which are the inverter controller and the converter controllers are ended.

On the other hand, a current one of inverter controller C30 and converter controllers C21 to C26 receives a timing signal in the same manner as in Steps S021 and S041 (Step S061).

Next, the current one of inverter controller C30 and converter controllers C21 to C26 executes a process for determining whether or not its turn to start driving a corresponding one of inverter 30 and converters 21 to 26 has come, based on the received timing signal (Step S062). More specifically, the current one of inverter controller C30 and converter controllers C21 to C26 compares apparatus identification information included in the timing signal and the apparatus identification information held in the controller itself. When the both match, the controller determines that its turn has come.

Upon determining that its turn has come (when the answer in Step S062 is "YES"), the current one of inverter controller C30 and converter controllers C21 to C26 starts a pulse driving process (Step S063) in the same manner as in Steps S023 and S044.

On the other hand, upon determining that its turn has not come (when the answer in Step S062 is "NO"), the current one of the inverter controller C30 and the converter controllers C21 to C26 skips a pulse driving start process (Step S063) and ends the process.

Each of inverter controller C30 and converter controllers C21 to C26 which skipped a pulse driving start process and ended the process repeats above-described processing S061 and S062 each time a timing signal is transmitted from timing controller C1 until the controller determines that its turn has come.

According to this example, the following effects can be obtained.

(4) In this example, timing controller C1 executes a process for identifying a transmission destination according to a position in the driving start order (Step S053), and a process for transmitting the timing signal (Step S054). In this way, each of inverter controller and converter controllers does not always need to hold information related to the position thereof in the driving start order. Thus, it is possible to reduce a burden for managing the position in the driving start order in inverter controller C30 and converter controllers C21 to C26.

### EMBODIMENT 1

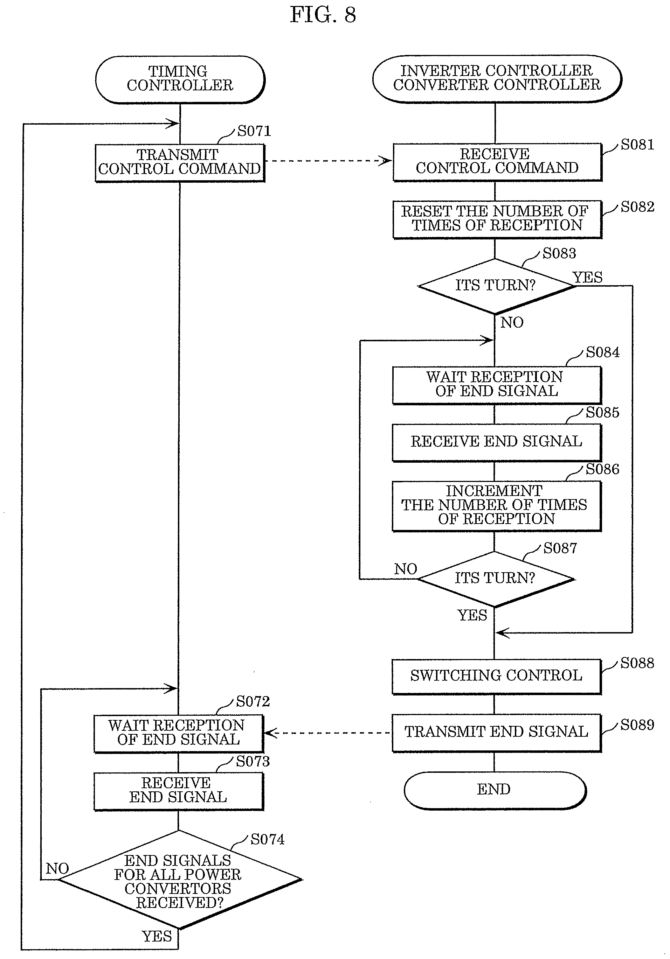

Next, Embodiment 1 is described with reference to FIG. 8. In Embodiment 1, each of inverter controller C30 and converter controllers C21 to C26 which ended a pulse driving start process transmits an end signal. Subsequently, based on the end signal, a next controller among inverter controller C30 and converter controllers C21 to C26 starts pulse driving. Detailed descriptions of parts similar to those in examples 1 and 2 are not repeated.

In this embodiment, a memory in each of inverter controller C30 and converter controllers C21 to C26 can store the number of times of reception of an end signal.

Here, timing controller C1 executes a process for transmitting a timing signal as illustrated in FIG. 8 (Step S071).

Next, a current one of inverter controller C30 and a converter controller included in converter controllers C21 to C26 executes a process for receiving a timing signal (Step S081). The current one of inverter controller C30 and the converter controller included in converter controllers C21 to C26 transmits a timing signal transmitted by timing controller C1 via communication line L2. At this time, the current one of inverter controller C30 and the converter controller included in converter controllers C21 to C26 resets the number of times of reception of an end signal stored in the memory (Step S082).

Next, the current one of inverter controller C30 and the converter controller included in converter controllers C21 to C26 executes a process for determining whether or not its turn to start driving the corresponding one of inverter 30 and the converter included in converters 21 to 26 has come (Step S083). More specifically, a unique driving start order is assigned in advance to each of inverter controller C30 and converter controllers C21 to C26, and, when the position in the driving start order assigned to the current one of inverter controller C30 and the converter controller included in converter controllers C21 to C26 itself is first, the current one to which the first position in the driving start order is assigned determines that its turn has come. When the position in the driving start order assigned to the current one of inverter controller C30 and the converter controller included in converter controllers C21 to C26 itself is second or later, the current one to which the second or later position in the driving start order is assigned determines that its turn has not come.

Here, the current one of inverter controller C30 and the converter controller included in converter controllers C21 to C26 which determined that its turn has come (when the answer in Step S083 is "YES") starts a pulse driving process (Step S088).

Upon determining that its turn has not come (when the answer in Step S083 is "NO"), the current one of inverter controller C30 and the converter controller included in converter controllers C21 to C26 executes a process for waiting reception of an end signal (Step S084). More specifically, the current one of inverter controller C30 and the converter controller included in converter controllers C21 to C26 waits for the reception of the end signal transmitted by another controller among inverter controller C30 and converter controllers C21 to C26 which started the pulse driving process (Step S085).

When the current one of inverter controller C30 and the converter controller included in converter controllers C21 to C26 received an end signal transmitted by another one of inverter controller C30 and the converter controller included in converter controllers C21 to C26, the current one executes a process for determining whether its turn has come (Step S087). More specifically, when the current one of inverter controller C30 and the converter controller included in converter controllers C21 to C26 received the end signal transmitted by timing controller C1, the current one updates (increments) the number of times of reception recorded in the memory (Step S086). Subsequently, the current one of inverter controller C30 and the converter controller included in converter controllers C21 to C26 determines that its turn has come when the updated number of times of reception matches the position of the current controller itself in the driving start order.

Upon determining that its turn has not come (when the answer in Step S087 is "NO"), the current one of inverter controller C30 and the converter controller included in converter controllers C21 to C26 executes a process for waiting reception of an end signal (Step S084).

Upon determining that its turn has come (when the answer in Step S087 is "YES"), the current one of inverter controller C30 and the converter controller included in converter controllers C21 to C26 starts a pulse driving process (Step S088).

Next, the current one of inverter controller C30 and the converter controller included in converter controllers C21 to C26 executes a process for transmitting an end signal (Step S089). More specifically, the current one of inverter controller C30 and the converter controller included in converter controllers C21 to C26 transmits the end signal to timing controller C1 and the other inverter controller C30 and converter controllers C21 to C26 via communication line L2.

In addition, timing controller C1 executes a process for waiting reception of an end signal (Step S072). More specifically, timing controller C1 waits for reception of an end signal transmitted by one of inverter controller C30 and converter controllers C21 to C26 which executed the process for starting an switching operation (Step S088).

Subsequently, when timing controller C1 received the end signal (Step S073), timing controller C1 executes a process for determining whether or not end signals for all of inverter controller C30 and converter controllers C21 to C26 have been received (Step S074). More specifically, timing controller C1 counts the number of times of reception of an end signal received from inverter controller C30 and converter controllers C21 to C26. Subsequently, when timing controller C1 determined that the number of times of reception of an end signal reached the number of power converters to which positions in the driving stat order are assigned, timing controller C1 determines that end signals for all of inverter controller C30 and converter controllers C21 to C26 have been received.

Here, when timing controller C1 determined that end signals for all of inverter controller C30 and converter controllers C21 to C26 have not been received (the answer is "NO" in Step S074), timing controller C1 continues the process for waiting reception of an end signal from each of inverter controller C30 and converter controllers C21 to C26 which have not transmitted an end signal (Step S072).

When timing controller C1 determined that end signals for all of inverter controller C30 and converter controllers C21 to C26 have been received (the answer is "YES" in Step S074), timing controller C1 returns to a process for transmitting a timing signal (Step S071).

According to this embodiment, the following effects can be obtained.

(5) Based on the end of a process for starting pulse driving of the other power converter, the current controller itself can start a pulse driving process by the controller itself. Accordingly, it is possible to reduce overlap of timings for pulse drive start processes.

### EXAMPLE 4

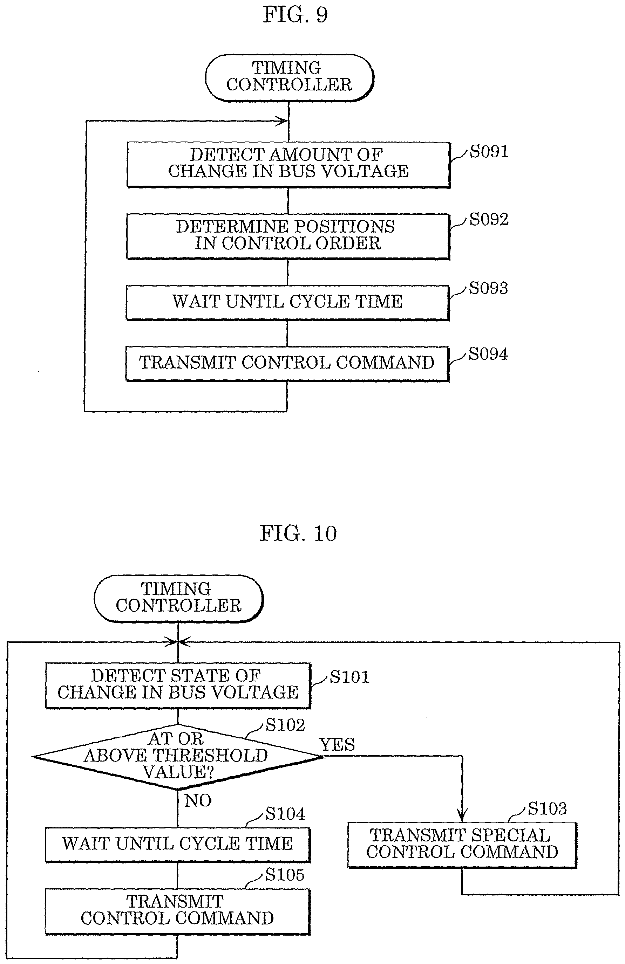

Next, example 4, which is not claimed, but necessary for understanding the invention, is described with reference to FIG. 9. In example 2, timing controller C1 randomly changes positions in a switching operation start order. In example 4 positions in the control order are changed depending on the amount of variation in bus voltage generated during the switching operation. Detailed descriptions of parts similar to those in example 2 are not repeated.

In this embodiment, timing controller C1 includes a memory which records the amount of variation in bus voltage generated during the switching operation, for each of inverter 30 and converters 21 to 26.

Here, timing controller C1 executes a process for detecting the amount of variation in bus voltage as illustrated in FIG. 9 (Step S091). More specifically, when timing controller C1 detected start of a switching operation process in one of inverter controller C30 and a converter controller included in converter controllers C21 to C26, timing controller C1 detects the amount of variation in bus voltage immediately after the switching operation process was started. Subsequently, timing controller C1 records the amount of variation in bus voltage in association with identification information of the one of inverter controller C30 and the converter controller included in converter controllers C21 to C26.

Next, timing controller C1 executes a process for determining the positions in the control order (Step S092). More specifically, timing controller C1 determines the positions in the control order according to the amount of variation in bus voltage. For example, the control start order is determined so that switching operation processes which significantly affect the amount of variation in bus voltage are not performed successively.

Next, timing controller C1 executes a waiting process until a cycle time in the same manner as in Step S032 (Step S093).

Next, when timing controller C1 determines that the cycle time has reached, timing controller C1 executes a process for transmitting a timing signal in the same manner as in Step S033 (Step S094).

Each of inverter controller C30 and converter controllers C21 to C26 executes a sequence of processes for receiving a timing signal, storing a driving start signal, waiting until its turn comes, and starting pulse driving, in the same manner as in S041 to S044 in example 2.

According to this example, the following effects can be obtained.

(6) The positions in the control order are determined so that switching operation processes which significantly affect the amount of variation in bus voltage are not performed successively. In this way, it is possible to disperse noises that are generated, according to the amount of variation in bus voltage.

### EMBODIMENT 2

Next, Embodiment 2 is described with reference to FIGs. 10 to 12. In example 4, positions in a control order are changed depending on the state of a bus voltage. In Embodiment 2, when the variation in bus voltage is large, pulse driving start processes are executed in the same period. Detailed descriptions of parts similar to those in example 5 are not repeated.

In this embodiment, data related to a threshold value for the amount of variation in bus voltage is held in advance in timing controller C1 so as to determine the need to perform processes for starting pulse driving in the same period.

Here, timing controller C1 executes a process for detecting the state of variation in bus voltage as illustrated in FIG. 10 (Step S101). More specifically, timing controller C1 measures the value of voltage in DC bus L1, and calculates a variation between measured values of voltages in the bus.

Next, timing controller C1 executes a process for determining whether or not the amount of variation in bus voltage is at or above the threshold value (Step S102). More specifically, timing controller C1 compares the variation in the values of voltages in the bus and the threshold value.

Here, when timing controller C1 determines that the variation in bus voltage of DC bus L1 is at or above the threshold value (the answer is "YES" in Step S102), timing controller C1 executes a process for transmitting a special timing signal (also referred to as a special control command in the drawings and hereinafter) to each of inverter controller C30 and converter controllers C21 to C26 (Step S103). This special timing signal includes special instruction information for instructing a process for starting a pulse driving process at the same timing. Subsequently, timing controller C1 returns to a process for detecting the state of variation in bus voltage (Step S101).

When timing controller C1 determines that the variation value in bus voltage of DC bus L1 is not at or above the threshold value (the answer is "NO" in Step S102), timing controller C1 executes a waiting process until cycle time (Step S104) in the same manner as in Step S093.

When timing controller C1 determines that the cycle time has reached, timing controller C1 executes a process for transmitting a timing signal (Step S105) in the same manner as in Step S094.

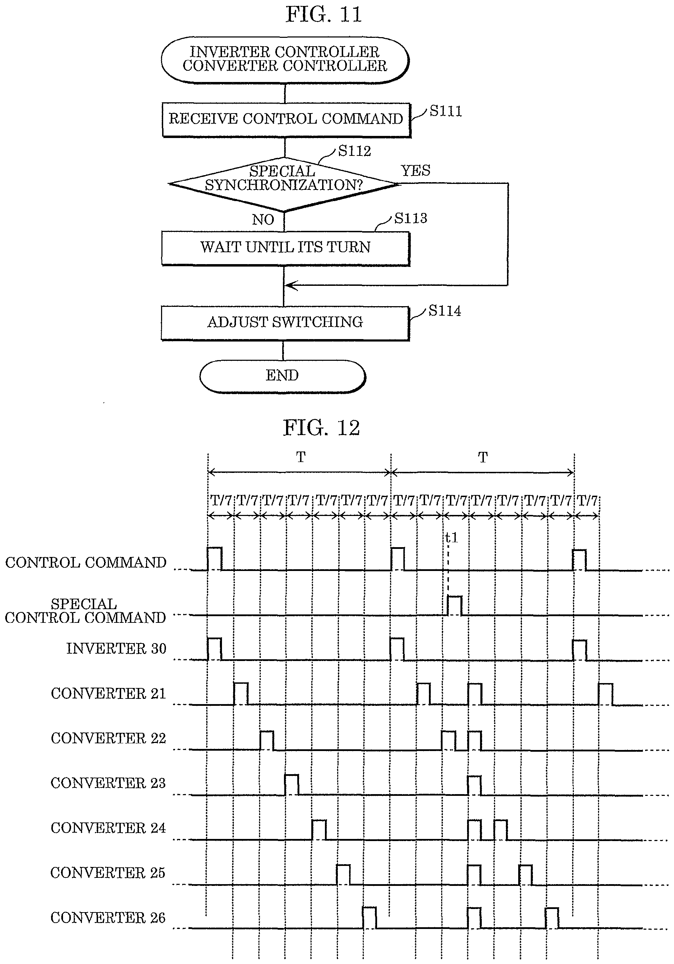

Next, a process performed by each of inverter controller C30 and converter controllers C21 to C26 is described with reference to FIG. 11.

Here, current ones of inverter controller C30 and converter controllers C21 to C26 execute a process for receiving a timing signal in the same manner as in Step S021 (Step S111).

Next, the current ones of inverter controller C30 and converter controllers C21 to C26 execute a process for determining whether or not the received timing signal is a special timing signal (Step S112). More specifically, the current ones of inverter controller C30 and converter controllers C21 to C26 determine whether or not the timing signal includes the special instruction information.

Upon determining that the timing signal is not the special timing signal (the answer is "NO" in Step S112), the current ones of inverter controller C30 and each of converter controllers C21 to C26 execute a process for waiting until their turn comes in the same manner as in Step S022 (Step S113).

Upon determining that the timing signal is the special timing signal (the answer is "YES" in Step S112), the current ones of inverter controller C30 and converter controllers C21 to C26 skip a waiting process (Step S113) until their turn comes and executes a process for starting pulse driving in the same manner as in Step S023.

As illustrated in FIG. 12, in first cycle T, processes for starting pulse driving are performed in the listed driving start order of inverter 30, converter 21 .... Next, a case in which the amount of variation at or above a threshold value in bus voltage of DC bus L1 was detected at time t1 in cycle T. In this case, timing controller C1 transmits a special timing signal to the current ones of converter controllers C21 to C26. Converter controllers C21 to C26 which received the special timing signal start pulse driving processes immediately at the same timing.

It is to be noted that timing controller C1 may transmit a special timing signal also to inverter controller C30, although there is no such indication in FIG. 12. In this case, inverter controller C30 which received the special timing signal starts a pulse driving process immediately at the same timing as the timing for current ones of converter controllers C21 to C26.

According to this embodiment, the following effects can be obtained.

(7) When the variation in bus voltage of DC bus L1 is significantly large, and there is a possibility that an abnormal state such as an excessive voltage or an insufficient voltage is generated, it is possible to increase the capacity of power supply to the bus voltage of L1 by synchronizing switching operations by the current ones of inverter controller C30 and converter controllers C21 to C26. Accordingly, it is possible to prevent the bus voltage of L1 from transitioning into such an abnormal state.

### EMBODIMENT 3

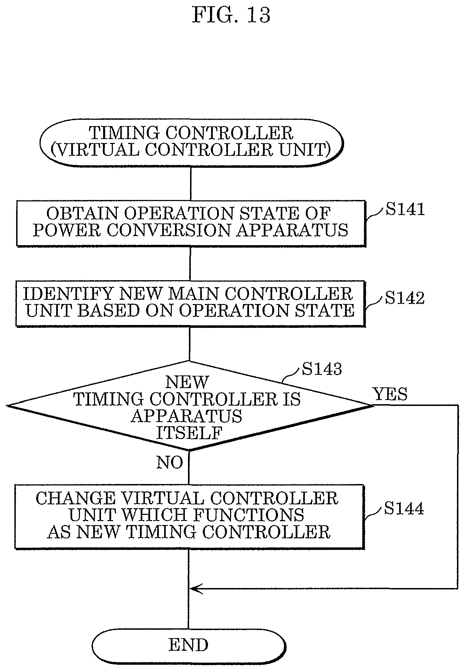

Next, Embodiment 3 is described with reference to FIG. 13. In each of examples 1-4 and embodiments 1 and 2, timing controller C1 which has been determined in advance transmits a timing signal to each of inverter controller C30 and controllers C21 to C26. In Embodiment 3, a virtual controller unit is connected to each of converter controllers C21 to C26 and inverter controller C30, and one of the virtual controller units is timing controller C1. Detailed descriptions of parts similar to those in examples 1 - 4 and embodiments 1 and 2 are not repeated.

In this embodiment, each of the virtual controller units connected to converter controllers C21 to C26 and inverter controller C30 includes a memory, and the memory is capable of storing whether or not the virtual controller unit functions as timing controller C1. Subsequently, the virtual controller unit which is recorded in the memory as being the one functioning as timing controller C1 functions as timing controller C1.

First, any one of the virtual controller units connected to converter controllers C21 to C26 and inverter controller C30 is determined to be timing controller C1.

Each of converter controllers C21 to C26 and inverter controller C30 has a function for transmitting information indicating its own operation state (for example, a timing for starting driving) of timing controller C1 to the virtual controller unit functioning as timing controller C1. In addition, the virtual controller unit functioning as timing controller C1 holds in advance information relating to a main control determination standard for determining a virtual controller unit which is caused to function as timing controller C1 next, based on the information indicating the operation state obtained from a current one of converter controllers C21 to C26 and inverter controller C30. The memory of the virtual controller unit functioning as timing controller C1 records a rule for determining one of the virtual controllers connected to the converter controllers and inverter controller as new timing controller C1, based on a main control determination standard (for example, "a control start timing is earliest").

Here, as illustrated in FIG. 13, the virtual controller unit functioning as timing controller C1 executes a process for obtaining the operation state of each of converters 21 to 26 and inverter 30 (Step S141). More specifically, the virtual controller unit functioning as timing controller C1 obtains the information indicating the operation state from each of converter controllers C21 to C26 and inverter controller C30. For example, the virtual controller unit functioning as timing controller C1 obtains a timing for starting driving of each of converters 21 to 26 and inverter 30, as information indicating the operation state. Subsequently, the virtual controller unit functioning as timing controller C1 stores the information indicating the operation state obtained from each of converter controllers C21 to C26 and inverter controller C30, in association with apparatus identification information.

Next, the virtual controller unit functioning as timing controller C1 executes a special process by a virtual controller unit which functions as a timing controller next, based on an operation state (Step S142). More specifically, the virtual controller unit functioning as timing controller C1 determines the virtual controller unit (new timing controller) which functions as the timing controller next, based on the stored operation state and main control determination standard.

Next, the virtual controller unit functioning as timing controller C1 executes a process for determining whether or not the new timing controller is the same as the virtual controller unit before the determination (Step S143). More specifically, the virtual controller unit functioning as timing controller C1 compares the apparatus identification information of the determined new timing controller and its own apparatus identification information. When the both match, the virtual controller unit functioning as timing controller C1 determines that the virtual controller unit functioning as timing controller C1 and the new timing controller are the same.

When the virtual controller unit functioning as timing controller C1 determines that the virtual controller unit functioning as timing controller C1 and the new timing controller are not the same (when the answer in Step S143 is "NO"), the virtual controller unit functioning as timing controller C1 executes a process for changing the virtual controller unit functioning as timing controller C1 (Step S144). More specifically, the virtual controller unit functioning as timing controller C1 transmits control authorization information to the new timing controller determined based on the determination rule. The virtual controller unit which received the control authorization information records a main control authorization to an authorization memory. Subsequently, this virtual control unit functions as timing controller C1.

On the other hand, when the virtual controller unit functioning as timing controller C1 determines that the virtual controller unit functioning as timing controller C1 and the new timing controller are the same (when the answer in Step S143 is "YES"), the virtual controller unit functioning as timing controller C1 skips a process for changing the virtual controller unit (Step S144). In this case, in the same manner as in Embodiments 1 to 6, the virtual controller unit functioning as timing controller C1 keeps functioning as timing controller C1.

According to this embodiment, the following effects can be obtained.

(8) In this embodiment, a process for obtaining the operation state of each of converters 21 to 26 and inverter 30 (Step S141) and a process for determining a new timing controller based on the operation state (Step S142) are executed. In this way, it is possible to select an appropriate virtual controller unit which functions as a timing controller, according to the operation state of each of converters 21 to 26 and inverter 30.

### OTHER EMBODIMENTS

In addition, each of the embodiments may be modified as below.

- It is assumed that, in each of the embodiments, solar battery panels 11, 12, and 13, fuel cell 14, rechargeable battery 15, and electric vehicle 16 are used as distributed power supplies 10. Converters 21 to 26 are connected to respective distributed power supplies 10. The kinds of distributed power supplies are not limited thereto. It is also possible to use other distributed power supplies, or employ a configuration in which some of these are combined.

In addition, each of converters 21 to 26 and inverter 30 as a power converter does not need to be an independent apparatus. For example, it is possible to provide a power conversion system according to the present invention, in a distributed power supply system (power conditioner) in an enclosure in which a plurality of converters and a single inverter are provided.

In each of the embodiments, processes for starting pulse driving are executed at time points which are shifted by time [T / n] at equal intervals in respective power converters. Here, the time intervals between the time points at which pulse driving processes are started may be changed randomly. In this case, timing controller C1 randomly determines timings for executing switching operation start processes in respective converter controllers C21 to C26 and inverter controller C30 in cycle T. Next, timing controller C1 calculates an adjusted waiting time from a timing signal, as for each of converter controllers C21 to C26 and inverter controller C30. Subsequently, timing controller C1 notifies each of converter controllers C21 to C26 and inverter controller C30 of the calculated adjusted waiting time. Each of converter controllers C21 to C26 and inverter controller C30 executes a switching operation start process, based on the adjusted waiting time obtained from timing controller C1.
- In Embodiment 3, a virtual controller unit functioning as timing controller C1 is changed depending on an operation state of the power conversion system. Here, it is also good to connect a bus voltage monitoring unit which monitors a bus voltage, to a virtual controller unit functioning as timing controller C1. In this way, it is possible to disperse noises, according to the amount of variation in bus voltage.
- In addition, in each of the embodiments, any of the constituent elements such as timing controller C1, converter controllers C21 to C26, inverter controller C30 may be configured as exclusive hardware (an exclusive circuit) or may be implemented by means of a software program suitable for the constituent element being executed. Each of the constituent elements may be implemented by means of a program executing unit such as a CPU and a processor reading and executing a software program recorded on a recording medium such as a hard disc or a semiconductor memory.

Although the power conversion systems according to one or more aspects have been described based on the embodiments above, the present invention is not limited to these embodiments, but is defined by the scope of the claims.

### REFERENCE MARKS IN THE DRAWINGS

- 10: Distributed power supply
- 11 to 13: Solar battery panel
- 14: Fuel cell
- 15: Rechargeable battery
- 16: Electric vehicle
- 20: Converter unit
- 21 to 26: Converter
- 30: Inverter
- 50: System power supply
- 211: Direct-current reactor
- 212, 301 to 304: Switching element
- 213: Diode
- 214: Capacitor
- C1: Timing controller
- C21 to C26: Converter controller
- C30: Inverter controller
- L1: DC bus
- L2: Communication line
- U1: Power conversion system

## Claims

1. A power conversion system (U1) which is configured to supply an alternating-current power system with power output from distributed power supplies (10), the power conversion system (U1) comprising:
a plurality of converters (21, 22, 23, 24, 25, 26) each of which includes a switching element (212), and is configured to be connected to a corresponding one of the distributed power supplies (10), and to convert a direct-current voltage input from the corresponding one of the distributed power supplies (10) into a direct-current output having a predetermined voltage;
an inverter (30) which is configured to receive the direct-current output from the plurality of converters (21, 22, 23, 24, 25, 26) via a common direct-current power path, and to convert the direct-current output received into an alternating-current output having a predetermined frequency, and to supply the alternating-current output to the alternating-current power system;
a plurality of converter controllers (C21, C22, C23, C24, C25, C26) which are provided corresponding to the plurality of converters (21, 22, 23, 24, 25, 26), and each of which being configured to perform pulse driving of the switching element (301, 302, 303,304) of a corresponding one of the plurality of converters (21, 22, 23, 24, 25, 26) so as to cause the switching element (301, 302, 303,304) to generate a direct-current output based on a time period;
an inverter controller (C30) which is provided corresponding to the inverter (30), and configured to drive the inverter (30) based on said time period so as to cause the inverter (30) to generate an alternating-current output; and
a timing controller (C1) which is configured to output timing signals for causing the plurality of converter controllers (C21, C22, C23, C24, C25, C26) to start driving of the plurality of converters (21, 22, 23, 24, 25, 26) on a basis of a predetermined time cycle,
wherein each of converter controllers (C21, C22, C23, C24, C25, C26), inverter controller (C30), and timing controller (C1) are connected via a communication line (L2),
wherein, the plurality of converter controllers (C21, C22, C23, C24, C25, C26) are configured to, upon obtaining the timing signals, start driving of the plurality of converters (21, 22, 23, 24, 25, 26) at different timings in the predetermined time cycle, so that driving of corresponding converters (C21, C22, C23, C24, C25, C26) is not started at the same time,
**characterized in that**
each of the plurality of converter controllers (C21, C22, C23, C24, C25, C26) is configured to start driving of the corresponding one of the converters (21, 22, 23, 24, 25, 26), and then output an end signal to other converter controllers (C21, C22, C23, C24, C25, C26), and
each of the plurality of converter controllers (C21, C22, C23, C24, C25, C26) is configured to receive the end signals, count the number of times of reception of the end signal, and start driving of the corresponding one of the converters (21, 22, 23, 24, 25, 26) when the converter controller determines that its turn to start driving the corresponding one of the converters (21, 22, 23, 24, 25, 26) has come, based on the number of times of reception of the end signal and a unique driving start order which is assigned in advance to each of inverter controller (C30) and converter controllers (C21, C22, C23, C24, C25, C26).

2. The power conversion system (U1) according to claim 1,
wherein each of the plurality of converter controllers (C21, C22, C23, C24, C25, C26):
is configured to hold information related to a position of the corresponding one of the plurality of converter controllers (C21, C22, C23, C24, C25, C26) in a driving start order in which pulse driving by the corresponding one of the plurality of converter controllers (C21, C22, C23, C24, C25, C26) is started; and
upon obtaining a corresponding one of the timing signals, configured to start pulse driving of the corresponding one of the plurality of converters (21, 22, 23, 24, 25, 26) at a timing based on the position of the corresponding one of the plurality of converter controllers (C21, C22, C23, C24, C25, C26) in the driving start order and the number of times of reception of the end signal.

3. The power conversion system (U1) according to claim 1,
wherein the timing controller (C1):
includes a random number generator; and is configured to determine the position of the one of the plurality of converter controllers (C21, C22, C23, C24, C25, C26) in the driving start order, based on a random number value obtained from the random number generator.

4. The power conversion system (U1) according to any one of claim 1 to claim 4,
wherein the timing controller (C1) is configured to wait for reception of the end signals from the converter controllers (C21, C22, C23, C24, C25, C26) and the inverter controller (C30).

5. The power conversion system (U1) according to any one of claim 1 to claim 4,
wherein virtual controller units are connected respectively to the plurality of converter controllers (C21, C22, C23, C24, C25, C26) and the inverter (30) controller (C30), and
one of the virtual controller units is configured to function as the timing controller (C1).

6. The power conversion system (U1) according to any one of claim 1 to claim 5,
wherein the timing controller (C1) is configured to detect whether an abnormality occurs in a value of voltage in the direct-current power path, and if an abnormality occurs to transmit a special control command to the plurality of converter controllers (C21, C22, C23, C24, C25, C26) and the inverter (30) controller (C30), the special control command being a command for causing the plurality of converter controllers (C21, C22, C23, C24, C25, C26) and the inverter (30) controller (C30) to immediately start driving of corresponding ones of the plurality of converters (21, 22, 23, 24, 25, 26) and the inverter (30), and
all of the plurality of converter controllers (C21, C22, C23, C24, C25, C26) and the inverter (30) controller (C30) configured to start driving of the corresponding ones of the plurality of converters (21, 22, 23, 24, 25, 26) and the inverter (30) at a same time when receiving th special control command.

## Patentansprüche

1. Leistungsumwandlungssystem (U1), das dazu ausgestaltet ist, ein Wechselstromsystem mit Strom zu versorgen, der von dezentralen Stromversorgungen (10) abgegeben wird, wobei das Leistungsumwandlungssystem (U1) umfasst:
mehrere Stromrichter (21, 22, 23, 24, 25, 26), die jeweils ein Schaltelement (212) aufweisen und dazu ausgestaltet sind, mit einer entsprechenden der dezentralen Stromversorgungen (10) verbunden zu werden und eine Gleichspannungseingangsleistung von der entsprechenden der dezentralen Stromversorgungen (10) in eine Gleichstromausgangsleistung mit einer vorgegebenen Spannung umzuwandeln;
einen Wechselrichter (30), der dazu ausgestaltet ist, die Gleichstromausgangsleistung von den mehreren Stromrichtern (21, 22, 23, 24, 25, 26) über einen gemeinsamen Gleichstromweg zu empfangen und die empfangene Gleichstromausgangsleistung in eine Wechselstromausgangsleistung mit einer vorgegebenen Frequenz umzuwandeln und die Wechselstromausgangsleistung dem Wechselstromsystem zuzuführen;
mehrere Stromrichtersteuerungen (C21, C22, C23, C24, C25, C26), die entsprechend den mehreren Stromrichtern (21, 22, 23, 24, 25, 26) vorgesehen und jeweils dazu ausgestaltet sind, ein Impulsansteuern des Schaltelements (301, 302, 303, 304) eines entsprechenden der mehreren Stromrichter (21, 22, 23, 24, 25, 26) auszuführen, um zu bewirken, dass das Schaltelement (301, 302, 303, 304) eine Gleichstromausgangsleistung basierend auf einem Zeitraum erzeugt;
eine Wechselrichtersteuerung (C30), die entsprechend dem Wechselrichter (30) vorgesehen und dazu ausgestaltet ist, den Wechselrichter (30) basierend auf dem Zeitraum anzusteuern, um zu bewirken, dass der Wechselrichter (30) eine Wechselstromausgangsleistung erzeugt; und
eine Zeitsteuerungseinheit (C1), die dazu ausgestaltet ist, Zeitsteuerungssignale auszugeben, um zu bewirken, dass die mehreren Stromrichtersteuerungen (C21, C22, C23, C24, C25, C26) mit dem Ansteuern der mehreren Stromrichter (21, 22, 23, 24, 25, 26) auf Grundlage eines vorgegebenen Zeitzyklus beginnen,
wobei jede der Stromrichtersteuerungen (C21, C22, C23, C24, C25, C26), der Wechselrichtersteuerung (C30) und der Zeitsteuerungseinheit (C1) über eine Kommunikationsleitung (L2) verbunden sind,
wobei die mehreren Stromrichtersteuerungen (C21, C22, C23, C24, C25, C26) dazu ausgestaltet sind, beim Erhalten der Zeitsteuerungssignale mit dem Ansteuern der mehreren Stromrichter (21, 22, 23, 24, 25, 26) mit unterschiedlichen Zeitsteuerungen in dem vorgegebenen Zeitzyklus zu beginnen, so dass das Ansteuern entsprechender Stromrichter (C21, C22, C23, C24, C25, C26) nicht gleichzeitig begonnen wird,
**dadurch gekennzeichnet, dass**
jede der mehreren Stromrichtersteuerungen (C21, C22, C23, C24, C25, C26) dazu ausgestaltet ist, mit dem Ansteuern des entsprechenden der Stromrichter (21, 22, 23, 24, 25, 26) zu beginnen und dann ein Endsignal an andere Stromrichtersteuerungen (C21, C22, C23, C24, C25, C26) auszugeben, und
jede der mehreren Stromrichtersteuerungen (C21, C22, C23, C24, C25, C26) dazu ausgestaltet ist, die Endsignale zu empfangen, zu zählen, wie viele Male ein Empfang des Endsignals erfolgt, und mit dem Ansteuern des entsprechenden der Stromrichter (21, 22, 23, 24, 25, 26) zu beginnen, wenn die Stromrichtersteuerung basierend darauf, wie viele Male ein Empfang des Endsignals erfolgt, und auf einer eindeutigen Ansteuerungsstartreihenfolge, die im Vorhinein jeder der Wechselrichtersteuerung (C30) und der Stromrichtersteuerungen (C21, C22, C23, C24, C25, C26) zugewiesen wird bestimmt, dass sie an der Reihe ist, mit dem Ansteuern des entsprechenden der Stromrichter (21, 22, 23, 24, 25, 26) zu beginnen.

2. Leistungsumwandlungssystem (U1) nach Anspruch 1,
wobei jede der mehreren Stromrichtersteuerungen (C21, C22, C23, C24, C25, C26):
dazu ausgestaltet ist, Informationen bezüglich einer Position der entsprechenden der mehreren Stromrichtersteuerungen (C21, C22, C23, C24, C25, C26) in einer Ansteuerungsstartreihenfolge, in der das Impulsansteuern durch die entsprechende der mehreren Stromrichtersteuerungen (C21, C22, C23, C24, C25, C26) begonnen wird, zu enthalten; und
beim Erhalten eines entsprechenden der Zeitsteuerungssignale dazu ausgestaltet ist, mit einer Zeitsteuerung, die auf der Position der entsprechenden der mehreren Stromrichtersteuerungen (C21, C22, C23, C24, C25, C26) in der Ansteuerungsstartreihenfolge und darauf, wie viele Male ein Empfang des Endsignals erfolgt, basiert, mit dem Impulsansteuern des entsprechenden der mehreren Stromrichter (21, 22, 23, 24, 25, 26) zu beginnen.

3. Leistungsumwandlungssystem (U1) nach Anspruch 1,
wobei die Zeitsteuerungseinheit (C1):
einen Zufallszahlgenerator aufweist; und
dazu ausgestaltet ist, die Position der einen der mehreren Stromrichtersteuerungen (C21, C22, C23, C24, C25, C26) in der Ansteuerungsstartreihenfolge basierend auf einem Zufallszahlenwert zu bestimmen, der von dem Zufallszahlgenerator erhalten wird.

4. Leistungsumwandlungssystem (U1) nach einem von Anspruch 1 bis Anspruch 4,
wobei die Zeitsteuerungseinheit (C1) dazu ausgestaltet ist, auf einen Empfang der Endsignale von den Stromrichtersteuerungen (C21, C22, C23, C24, C25, C26) und der Wechselrichtersteuerung (C30) zu warten.

5. Leistungsumwandlungssystem (U1) nach einem von Anspruch 1 bis Anspruch 4,
wobei virtuelle Steuerungseinheiten entsprechend mit den mehreren Stromrichtersteuerungen (C21, C22, C23, C24, C25, C26) und der Steuerung (C30) des Wechselrichters (30) verbunden sind und
eine der virtuellen Steuerungseinheiten dazu ausgestaltet ist, als die Zeitsteuerungseinheit (C1) zu fungieren.

6. Leistungsumwandlungssystem (U1) nach einem von Anspruch 1 bis Anspruch 5,
wobei die Zeitsteuerungseinheit (C1) dazu ausgestaltet ist zu erkennen, ob in einem Spannungswert in dem Gleichstromweg eine Anormalität auftritt, und, wenn eine Anormalität auftritt, einen speziellen Steuerbefehl an die mehreren Stromrichtersteuerungen (C21, C22, C23, C24, C25, C26) und die Steuerung (C30) des Wechselrichters (30) zu senden, wobei der spezielle Steuerbefehl ein Befehl ist, um zu bewirken, dass die mehreren Stromrichtersteuerungen (C21, C22, C23, C24, C25, C26) und die Steuerung (C30) des Wechselrichters (30) sofort mit dem Ansteuern entsprechender der mehreren Stromrichter (21, 22, 23, 24, 25, 26) und des Wechselrichters (30) beginnen, und
alle der mehreren Stromrichtersteuerungen (C21, C22, C23, C24, C25, C26) und der Steuerung (C30) des Wechselrichters (30) dazu ausgestaltet sind, mit dem Ansteuern der entsprechenden der mehreren Stromrichter (21, 22, 23, 24, 25, 26) und des Wechselrichters (30) gleichzeitig mit einem Erhalten des speziellen Steuerbefehls zu beginnen.

## Revendications

1. Système de conversion d'énergie (U1) qui est configuré de manière à alimenter un système d'alimentation en courant alternatif avec de l'énergie fournie en sortie à partir de blocs d'alimentation répartis (10), le système de conversion d'énergie (U1) comprenant :
une pluralité de convertisseurs (21, 22, 23, 24, 25, 26) lesquels incluent chacun un élément de commutation (212), et lesquels sont chacun configurés de manière à être connectés à un bloc correspondant des blocs d'alimentation répartis (10), et à convertir une entrée de tension continue provenant du bloc correspondant des blocs d'alimentation répartis (10), en une sortie de courant continu présentant une tension prédéterminée ;
un onduleur (30) qui est configuré de manière à recevoir la sortie de courant continu provenant de la pluralité de convertisseurs (21, 22, 23, 24, 25, 26), par l'intermédiaire d'un trajet d'alimentation en courant continu commun, et convertir la sortie de courant continu reçue en une sortie de courant alternatif présentant une fréquence prédéterminée, et à fournir la sortie de courant alternatif au système d'alimentation en courant alternatif ;
une pluralité de contrôleurs de convertisseurs (C21, C22, C23, C24, C25, C26) qui sont fournis en correspondance avec la pluralité de convertisseurs (21, 22, 23, 24, 25, 26), et dont chacun est configuré de manière à mettre en oeuvre un pilotage par impulsions de l'élément de commutation (301, 302, 303, 304) d'un convertisseur correspondant de la pluralité de convertisseurs (21, 22, 23, 24, 25, 26) afin d'amener l'élément de commutation (301, 302, 303, 304) à générer une sortie de courant continu sur la base d'une période de temps ;
un contrôleur d'onduleur (C30) qui est fourni en correspondance avec l'onduleur (30), et est configuré de manière à piloter l'onduleur (30) sur la base de ladite période de temps de manière à amener l'onduleur (30) à générer une sortie de courant alternatif ; et
un contrôleur de temporisation (C1) qui est configuré de manière à fournir en sortie des signaux de temporisation en vue d'amener la pluralité de contrôleurs de convertisseurs (C21, C22, C23, C24, C25, C26) à démarrer le pilotage de la pluralité de convertisseurs (21, 22, 23, 24, 25, 26) sur la base d'un cycle temporel prédéterminé ;
dans lequel chaque contrôleur parmi les contrôleurs de convertisseurs (C21, C22, C23, C24, C25, C26), le contrôleur d'onduleur (C30) et le contrôleur de temporisation (C1), est connecté par l'intermédiaire d'une ligne de communication (L2) ;
dans lequel les contrôleurs de la pluralité de contrôleurs de convertisseurs (C21, C22, C23, C24, C25, C26) sont configurés de manière à, suite à l'obtention des signaux de temporisation, initier le pilotage de la pluralité de convertisseurs (21, 22, 23, 24, 25, 26) à différentes temporisations dans le cycle temporel prédéterminé, de sorte que le pilotage de convertisseurs correspondants (C21, C22, C23, C24, C25, C26) n'est pas initié au même instant ;
**caractérisé en ce que** chaque contrôleur de convertisseur de la pluralité de contrôleurs de convertisseurs (C21, C22, C23, C24, C25, C26) est configuré de manière à initier le pilotage du convertisseur correspondant des convertisseurs (21, 22, 23, 24, 25, 26), et ensuite à fournir en sortie un signal de fin à d'autres contrôleurs de convertisseurs (C21, C22, C23, C24, C25, C26) ; et
chaque contrôleur de convertisseur de la pluralité de contrôleurs de convertisseurs (C21, C22, C23, C24, C25, C26) est configuré de manière à recevoir les signaux de fin, à compter le nombre d'occurrences de réception du signal de fin, et à initier le pilotage du convertisseur correspondant des convertisseurs (21, 22, 23, 24, 25, 26), lorsque le contrôleur de convertisseur détermine que son tour, s'agissant d'initier le pilotage du convertisseur correspondant des convertisseurs (21, 22, 23, 24, 25, 26), est venu, sur la base du nombre d'occurrences de réception du signal de fin et d'un ordre d'initiation de pilotage unique qui est attribué à l'avance à chaque contrôleur parmi le contrôleur d'onduleur (C30) et les contrôleurs de convertisseurs (C21, C22, C23, C24, C25, C26).

2. Système de conversion d'énergie (U1) selon la revendication 1,
dans lequel chaque contrôleur de la pluralité de contrôleurs de convertisseurs (C21, C22, C23, C24, C25, C26) :
est configuré de manière à maintenir des informations connexes à une position du contrôleur de convertisseur correspondant de la pluralité de contrôleurs de convertisseurs (C21, C22, C23, C24, C25, C26) dans un ordre d'initiation de pilotage dans lequel le pilotage par impulsions par celui correspondant de la pluralité de contrôleurs de convertisseurs (C21, C22, C23, C24, C25, C26) est initié ; et
suite à l'obtention d'un signal de temporisation correspondant parmi les signaux de temporisation, il est configuré de manière à initier le pilotage par impulsions du convertisseur correspondant de la pluralité de convertisseurs (21, 22, 23, 24, 25, 26) à une temporisation basée sur la position du contrôleur de convertisseur correspondant de la pluralité de contrôleurs de convertisseurs (C21, C22, C23, C24, C25, C26) dans l'ordre d'initiation de pilotage et le nombre d'occurrences de réception du signal de fin.

3. Système de conversion d'énergie (U1) selon la revendication 1,
dans lequel le contrôleur de temporisation (C1) :
inclut un générateur de nombres aléatoires ; et
est configuré de manière à déterminer la position dudit un contrôleur de convertisseur de la pluralité de contrôleurs de convertisseurs (C21, C22, C23, C24, C25, C26) dans l'ordre d'initiation de pilotage, sur la base d'une valeur aléatoire obtenue à partir du générateur de nombres aléatoires.

4. Système de conversion d'énergie (U1) selon l'une quelconque des revendications 1 à 4,
dans lequel le contrôleur de temporisation (C1) est configuré de manière à attendre la réception des signaux de fin en provenance des contrôleurs de convertisseurs (C21, C22, C23, C24, C25, C26) et du contrôleur d'onduleur (C30).

5. Système de conversion d'énergie (U1) selon l'une quelconque des revendications 1 à 4,
dans lequel des unités de contrôleurs virtuelles sont connectées respectivement à la pluralité de contrôleurs de convertisseurs (C21, C22, C23, C24, C25, C26) et au contrôleur d'onduleur (30) (C30) ; et
l'une des unités de contrôleurs virtuelles est configurée de manière à fonctionner en tant que le contrôleur de temporisation (C1).

6. Système de conversion d'énergie (U1) selon l'une quelconque des revendications 1 à 5,
dans lequel le contrôleur de temporisation (C1) est configuré de manière à détecter si une anomalie se produit dans une valeur de tension sur le trajet d'alimentation en courant continu et, si une anomalie se produit, à transmettre une instruction de commande spéciale à la pluralité de contrôleurs de convertisseurs (C21, C22, C23, C24, C25, C26) et au contrôleur d'onduleur (30) (C30), l'instruction de commande spéciale étant une instruction visant à amener la pluralité de contrôleurs de convertisseurs (C21, C22, C23, C24, C25, C26) et le contrôleur d'onduleur (30) (C30) à initier immédiatement le pilotage de convertisseurs correspondants de la pluralité de convertisseurs (21, 22, 23, 24, 25, 26) et de l'onduleur (30) ; et
dans lequel la totalité de la pluralité de contrôleurs de convertisseurs (C21, C22, C23, C24, C25, C26) et le contrôleur d'onduleur (C30) sont configurés de manière à initier le pilotage des convertisseurs correspondants de la pluralité de convertisseurs (21, 22, 23, 24, 25, 26) et de l'onduleur (30), au même instant, lors de la réception de l'instruction de commande spéciale.
